Europäisches Patentamt

European Patent Office

Office européen des brevets

(19)

(11) Veröffentlichungsnummer: **0 268 171**
**A1**

(12) **EUROPÄISCHE PATENTANMELDUNG**

(21) Anmeldenummer: **87116486.9**

(22) Anmeldetag: **07.11.87**

(51) Int. Cl.⁴: **C05G 5/00** , A01C 21/00

(30) Priorität: **07.11.86 DE 3638039**
**16.09.87 DE 3731094**

(43) Veröffentlichungstag der Anmeldung:
**25.05.88 Patentblatt 88/21**

(84) Benannte Vertragsstaaten:
**AT BE CH DE ES FR GB GR IT LI LU NL SE**

(71) Anmelder: **Barnängen Deutschland GmbH**
**Alfred-Nobel-Strasse 1-5**
**D-5020 Frechen b. Köln(DE)**

(72) Erfinder: **Niess, Klaus**
**Volkwinsweg 19**
**D-5040 Brühl(DE)**
Erfinder: **Reihlen, Roland, Dr.-Ing.**
**Karolingerstrasse 83**
**D-5042 Erftstadt(DE)**

(74) Vertreter: **Selting, Günther et al**
**Patentanwälte Von**
**Kreisler-Schönwald-Fues-Keller**
**Selting-Werner Deichmannhaus am**
**Hauptbahnhof**
**D-5000 Köln 1(DE)**

(54) **Verfahren zum Herstellen von Düngestäbchen und Düngestäbchen.**

(57) Zum Herstellen von Düngestäbchen aus Düngemitteln mit einem durch Pressen, insbesondere Strangpressen erhaltenen Grundkörper wird auf den Grundkörper ein Belag aus einem zum Stoff des Grundkörpers unterschiedlichen Stoff aufgebracht.

Ein bevorzugtes Düngestäbchen aus mehreren verschiedenen Stoffen, die räumlich getrennt sind und in axialer Richtung verlaufen, hat eine stranggepreßte, im wesentlichen U-förmige Rinne (14) aus einem ersten Stoff, in die als Belag der zweite Stoff (15) eingebettet ist.

FIG.6

## Verfahren zum Herstellen von Düngestäbchen und Düngestäbchen

### TECHNISCHES GEBIET

Die Erfindung betrifft Verfahren zum Herstellen von Düngestäbchen aus Düngemitteln mit einem durch Pressen, insbesondere Strangpressen erhaltenen Grundkörper und nach dem Verfahren hergestellte Düngestäbchen.

### STAND DER TECHNIK

Aus der DE-AS 35 30 297 ist ein Düngestäbchen bekannt, das aus verschiedenen Stoffen besteht und stranggepreßt ist. Dabei bestehen die verschiedenen Stoffe aus räumlich getrennten und in axialer Richtung verlaufenden, miteinander verbundenen Belägen, Beschichtungen, Streifen oder Strängen. Nach einer dort dargestellten Ausbildungsform sind mehrere solcher axial verlaufender Beläge, Streifen oder Stränge durch gemeinsames Extrudieren erhalten. Dies bedeutet, daß bei dieser Ausführungsform die Stoffe zu einer Extrusion geeignet sein müssen, das heißt, vergleichsweise hohe Temperaturen und Drücke aushalten zu müssen. Die Temperaturen im Extruder betragen dabei in der Regel mehr als 100° C, meistens 130 bis 150° C. Viele Stoffe, die in Düngestäbchen Anwendung finden, vertragen diese Temperaturen nicht. Auch müssen zur Verarbeitung durch Extruder bzw. Strangpressen entsprechende Bindemittel vorhanden sein.

### DARSTELLUNG DER ERFINDUNG

Die vorliegende Erfindung geht von der Aufgabe aus, durch Strangpressen hergestellte Düngestäbchen in der Weise zu verbessern, daß auch bisher in Düngestäbchen nicht verwendete Stoffe Anwendung finden können und damit die Düngestäbchen selbst eine verbesserte Wirkung haben.

Zur Lösung dieser Aufgabe wird bei einem Verfahren zum Herstellen von Düngestäbchen aus Düngemitteln mit einem durch Pressen erhaltenen Grundkörper erfindungsgemäß vorgeschlagen, daß auf den Grundkörper ein Belag aus einem zum Stoff des Grundkörpers unterschiedlichen Stoff aufgebracht wird. Dieser Belag, der nicht durch Pressen aufgebracht ist, ermöglicht damit die Anwendung von Stoffen, die bisher in Düngestäbchen nicht angewendet werden konnten und auf die nachfolgend noch eingegangen werden wird.

In einer erfindungsgemäßen Abwandlung wird vorgeschlagen, daß viele gepreßte Kerne vorbeschriebener Länge in eine Dragiertrommel eingebracht und in dieser durch Aufsprühen und Anwendung von Hitze mit dem Belag versehen werden.

In weiterer erfindungsgemäßer Ausgestaltung wird vorgeschlagen, daß durch Dragieren in einer Dragiertrommel oder mehreren hintereinander angeordneten Dragiertrommeln die Kerne mit einer Wachsschicht umgeben, dann in der Dragiertrommel die mit Wachs beschichteten Kerne mit dem Belag aus einem anderen Stoff dragiert und anschließend dieser Belag mit einer Wachsschicht versehen wird.

Durch die erfindungsgemäße Lösung wird somit vorgeschlagen, Kerne aus einem Düngemittel nach dem bekannten Dragierverfahren und somit in bekannten Dragiertrommeln oder auch im Wirbelbett mit einem Belag zu versehen. Damit können nunmehr für Düngestäbchen bekannte Einrichtungen verwendet werden, so daß dadurch Düngestäbchen mit grundsätzlich unterschiedlichen Stoffen einfach und entsprechend kostengünstig herstellbar sind.

Dieser Vorschlag beinhaltet somit, nach dem gleichen Dragierverfahren mehrschichtige Umhüllungen des Kerns aufzubringen, so daß hier ebenfalls ein einfaches und risikoloses Verfahren vorgeschlagen wird mit der Maßgabe, daß zum Herstellen von Düngestäbchen zur Ummantelung des Kerns nacheinander durch Dragieren unterschiedlichste Stoffe aufgebracht werden, die einzeln vorliegen oder auch als eine einheitliche Schicht in einem Gemisch vorliegen können.

In einer erfindungsgemäßen Abwandlung wird vorgeschlagen, daß zunächst in einem Extruder ein Strang aus einem ersten Stoff mit rinnenförmigem Querschnitt geformt und außerhalb des Spritzkopfes in die nach außen offene Rinne bzw. offenen Rinnen ein zweiter Stoff eingebracht und in der Rinne zur Aushärtung bzw. Erstarrung gebracht wird.

Durch den erfindungsgemäßen Vorschlag wird erreicht, daß in der Strangpresse bei den in Strangpressen unter Anwendung des Düngemittels entsprechenden Temperaturen und Drücken lediglich die U-förmige Rinne hergestellt wird. Diese U-förmige Rinne kann, abhängig von dem Stoff, aus dem sie besteht, eine mehr oder weniger große Wanddicke haben, wobei die Festigkeit jedoch groß sein soll.

In die U-förmige stranggepreßte Rinne wird im unmittelbaren Anschluß an die Austrittsdüse der Strangpresse ein zweiter Stoff eingefüllt, der innerhalb der Rinne erhärtet. Dieser zweite Stoff kann, mit einem Bindemittel versehen, in körniger Form vorliegen, so daß er innerhalb der Rinne aushärtet. Dieser zweite, in die Rinne einzufüllende Stoff kann jedoch auch über ein Röhrchen, das in die Rinne mündet, in Verbindung mit einer Pumpe in flüssiger oder pastöser bzw. teigiger Form vorliegen, so daß er ebenfalls innerhalb der tragenden Rinne nach mehr oder weniger kurzer Zeit seine feste Form erhält.

Durch die erfindungsgemäße Lösung ist es sehr einfach möglich, die zur Düngung vorgesehenen Stoffe so aufzubereiten und im Düngestäbchen anzuwenden, daß die optimalen Eigenschaften erhalten bleiben, weil keine Stoffe zugegeben werden müssen, die den in der Rinne angebrachten Stoff zum Strangpressen zu befähigen. Daher braucht der in der Rinne unterzubringende Stoff nicht temperaturbeständig zu sein.

Die erfindungsgemäße Lösung, eine ausreichend bemessene U-förmige tragende Rinne durch Strangpressen zu formen und in diese einen zweiten Stoff einzubringen, ermöglicht auch, diesen zweiten Stoff aus verschiedenen Stoffgemischen herzustellen. Die Aushärtung bzw. Festigkeit in der Rinne kann gering sein. Dies kann in der praktischen Anwendung Vorteile bringen.

Die erfindungsgemäße Lösung läßt zu, Düngestäbchen nunmehr auch aus solchen Stoffen herzustellen, die bisher im Düngestäbchen nicht verarbeitet werden konnten, weil die Herstellung der Kerne durch die beim Strangpressen angewendeten Temperaturen von üblicherweise 120° C bis 160° C solche Stoffe in ihrer Wirksamkeit vernichten oder so stark beeinträchtigen, daß sie weitgehend unwirksam würden. Zu solchen Stoffen gehören beispielsweise Algen, die den vorerwähnten Temperaturen beim Extrudieren nicht standhalten. Algen sind als Düngemittel grundsätzlich bereits verwendet worden, weil viele Meeresalgen nicht nur Stickstoff und Phosphor, sondern auch Spurenelemente wie Eisen, Jod und Kupfer aufweisen.

Besonders vorteilhaft bestehen die Algen aus Braunalgen. Dabei handelt es sich um solche, die auch unter dem Markenzeichen "Cremogen" auf den Markt gebracht werden.

In weiterer erfindungsgemäßer Ausgestaltung wird vorgeschlagen, daß der Belag aus einem Eiweiß (Ei weißstoffe, Eiweißkörper, Proteine), insbesondere Eiweißhydrolysat, besteht oder Eiweiß enthält.

In weiterer erfindungsgemäßer Ausgestaltung besteht der Belag aus Zucker, insbesondere aus Sudzucker oder enthält Zucker. Es wurde erkannt, daß Zucker in dem Belag eines Düngestäbchens nicht lediglich als Düngemittel gilt, sondern in vieler Hinsicht außerordentlich geeignet ist. So reduziert Zucker die Klebneigung bei Algen bzw. des Eiweißes. Auch ist Zucker ein billiges Streckmittel für eine Dragee-Decke. Weiterhin führt Zucker zu einer harten und optisch erfreulichen Decke. Es fördert das Dragieren mit Algen oder mit Eiweiß und ist selbst, wenn es ausschließlich als Decke verwendet wird, leichter dragierbar als Algen oder Eiweiß.

In weiterer erfindungsgemäßer Ausgestaltung ist ein Düngestäbchen dadurch gekennzeichnet, daß der Belag neben den einzeln oder in Kombination vorliegenden Algen, dem Eiweiß und dem Zucker ein Wachs, insbesondere Polywachs, in einem Anteil von 5 bis 35 Gewichtsprozent enthält.

Weitere vorteilhafte Zusammensetzungen eines Belages bestehen aus

40 bis 80 Gewichtsprozent Sudzucker
10 bis 40 Gewichtsprozent Algen (Cremogen) *
5 bis 40 Gewichtsprozent wasserlöslichem Wachs
oder

65 bis 76 Gewichtsprozent Sudzucker
15 bis 25 Gewichtsprozent Algen (Cremogen)
2 bis 10 Gewichtsprozent wasserlöslichem Wachs.

Besonders vorteilhaft enthält ein Belag aus Algen 25 Gewichtsprozent wasserlöslichen Wachs.

Weiterhin ist vorteilhaft ein Belag aus einer Mischung von Zucker mit Algen, die durch Wachs gebunden sind.

Die erfindungsgemäße Lösung macht es auch möglich, daß der Belag aus einer Mischung aus Eiweiß und Zucker besteht, wobei vorteilhaft der Belag die nachfolgende Zusammensetzung hat:

40 bis 80 Gewichtsprozent Eiweiß (insbesondere als Eiweißhydrolisat)
30 bis 70 Gewichtsprozent Zucker, insbesondere Sudzucker
3 bis 10 Gewichtsprozent wasserlöslicher Wachs.

Das erfindungsgemäß für die Herstellung von Düngestäbchen angewendete Verfahren macht es mit einfachen Mitteln möglich, daß zwischen dem Kern und dem Belag eine Schicht aus einem Wachs vorhanden ist. Durch diesen Vorschlag wird erreicht, daß das beim Einbringen des Belages gegebenenfalls vorhandene Wasser nicht in den Kern eindringen kann oder das Eindringen weitestgehend behindert ist, so daß der Kern seine Festigkeit behält.

Das erfindungsgemäße Verfahren macht es ebenfalls mit einfachen Mitteln möglich, den Belag

*) Cremogen ist der Handelsname für Cremogen Braunalge 716 656 der Firma Haarmann & Reimer GmbH in 3450 Holzminden.

außen mit einer Schicht aus Wachs zu bedecken, und zwar unabhängig davon, ob der Belag in seinem Inneren bereits Wachs enthält oder nicht.

Die erfindungsgemäße Lösung macht es möglich, den Belag wahlweise dünn oder dick aufzubringen oder einzubringen. So wird in weiterer erfindungsgemäßer Ausgestaltung vorgeschlagen, daß in dem Belag einzeln oder in Kombination die Algen, das Eiweiß oder der Zucker in Mengen von 5 bis 200 Gewichtsprozent des Gewichtes des Kerns haben.

Der Belag kann weiterhin Vitamine, z.B. A, B, C und D enthalten. Auch kann er Bakterien zur Düngung enthalten.

## BESCHREIBUNG DER ZEICHNUNG

Die Erfindung ist in den Zeichnungen beispielhaft erläutert. Es zeigen:

FIGUR 1 eine Pflanze mit Blumentopf und Düngestäbchen in perspektivischer Darstellung;

FIGUR 2 ein Düngestäbchen;

FIGUREN 3 bis 5 vertikale Schnitte durch Düngestäbchen;

FIGUREN 6 bis 9 Düngestäbchen mit verschiedenen Querschnittsformen;

FIGUR 10 eine Seitenansicht einer Strangpresse;

FIGUR 11 einen vertikalen Schnitt durch die Strangpresse nach Figur 10 entsprechend der dortigen Linie X-X.

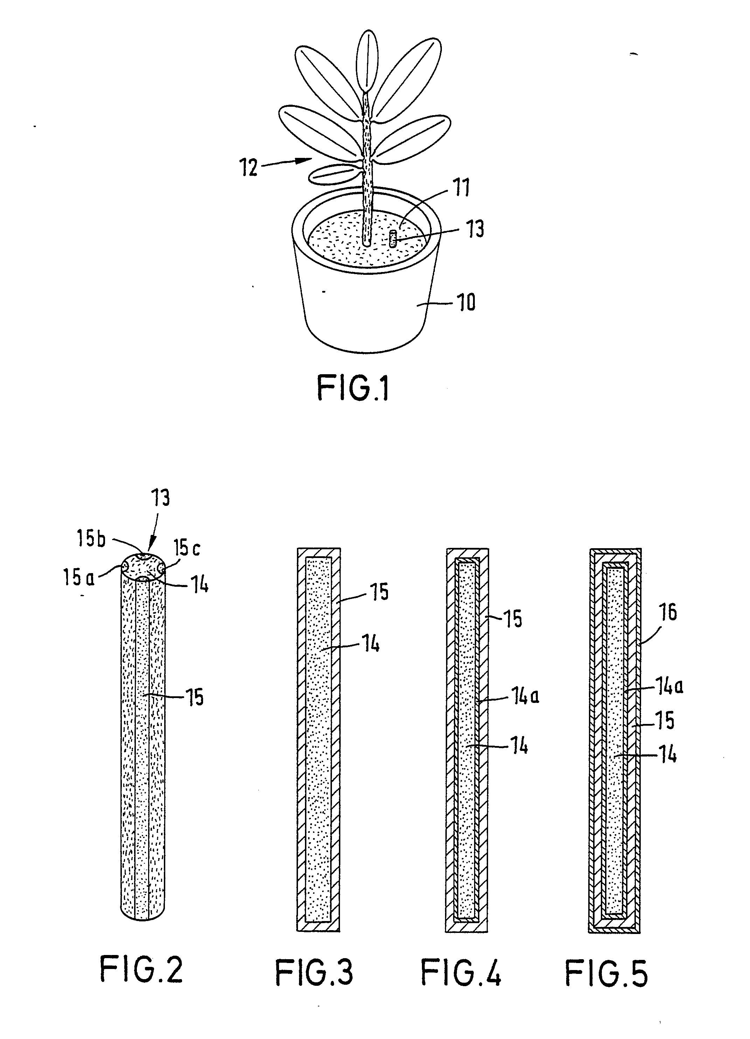

Figur 1 zeigt einen Blumentopf 10 und Blumenerde 11 und der Pflanze 12. In die Erde ist das Düngestäbchen 13 eingesteckt.

Figur 2 zeigt ein Düngestäbchen 13, das aus einem durch Strangpressen erhaltenen Kern 14 besteht, der in Achsrichtung ausgehend von seiner Außenseite mit vier Rinnen versehen ist, die jeweils einen halbkreisförmigen Querschnitt haben. In diese Rinnen ist ein anderer Stoff 15a, 15b, 15c, der nachfolgend als Belag bezeichnet wird eingebracht.

Das Düngestäbchen nach Figur 2 hat in einer praktischen Ausführungsform eine Länge von ca. 5 mm und eine Dicke von ca. 6 bis 7 mm.

Es besteht aus einem inneren Kern 14, der üblicherweise durch Strangpressen erhalten ist. Um die zur Aufbringung eines Belages 15 nach dem Dragierverfahren ausreichende Festigkeit zu erhalten, hat er ein Bindemittel aus Polyvinyl-Alkohol, auch bekannt unter der Markenbezeichnung "Polyvinol".

Der Belag 15 besteht einzeln oder in Kombination aus Algen, Zucker und Eiweiß. Diese Stoffe können durch Wachs gebunden sein.

Figur 4 zeigt, daß der Kern 14 mit einer Wachsschicht 14a umgeben ist, die ebenfalls in einer Dragiertrommel aufgebracht worden ist. Zum Aufbringen wird eine Gewichtseinheit Polywachs mit zwei Gewichtseinheiten Isopropylalkohl bei 60° C gelöst und dann aufgesprüht. Anschließend wird ebenfalls nach dem Dragierverfahren der Belag 15 aufgebracht, der einzeln oder in Kombination Algen, Eiweiß und Zucker enthält, die durch löslichen Wachs gebunden sind. Um diese zu erreichen, werden die Stoffe in Wasser und Polywachs bei einer Temperatur von ca. 40° C gelöst und bei ca. 60° C versprüht.

Nach Erhärtung des Belages wird dieser mit einer Wachsbeschichtung 16 versehen, wobei dazu vorzugsweise wiederum eine Gewichtseinheit Polywachs mit zwei Gewichtseinheiten Alkohol bei 60° C gelöst und auch bei dieser Temperatur versprüht wird.

## BESTER WEG ZUR AUSFÜHRUNG DER ERFINDUNG

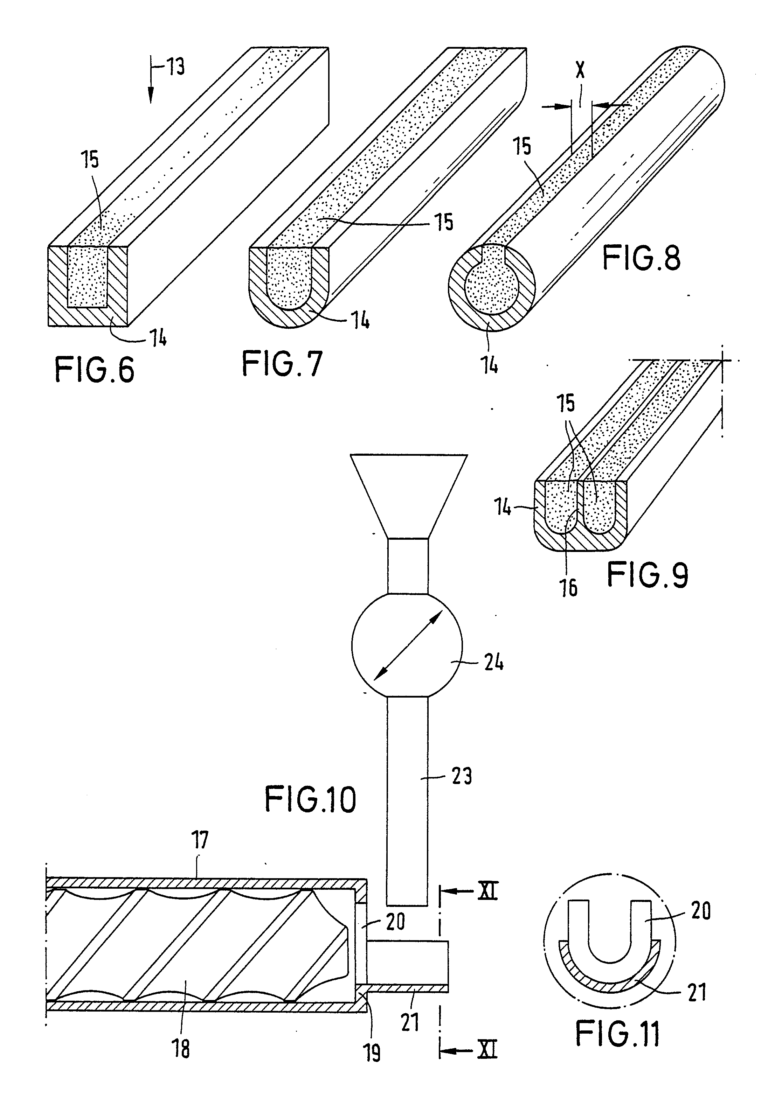

Figur 6 zeigt ein Düngestäbchen 13 mit einem insgesamt quadratischen Querschnitt. Vorhanden ist die äußere U-förmige Rinne 14, die in einem Extruder hergestellt worden ist. In diese bei der Herstellung nach oben offene Rinne wird ein zweiter für die Düngung vorgesehener Stoff bzw. Belag 15 eingebracht, wobei dieser Stoff auch aus zwei oder mehr Stoffgemischen bestehen kann. Dieser zweite Stoff 15 erhält seine feste Raumform innerhalb der tragenden Rinne 14. Diese kann, abhängig von dem Stoff, aus dem sie besteht, mehr oder weniger dick sein. Sie soll jedoch eine hohe Festigkeit haben, um in das Erdreich eingedrückt werden zu können.

Figur 7 zeigt ein Düngestäbchen, bei dem die Rinne 14 in ihrem Bodenbereich abgerundet ist.

Figur 8 zeigt eine Rinne, die von kreisförmigem Querschnitt ist und sich über einen Dreiviertelkreis erstreckt, so daß der in der Rinne 14 eingefüllte Stoff 15 nach außen eine geringere Angriffsfläche hat als bei den Ausführungsbeispielen nach den Figuren 6 und 7. Durch die Spaltbreite X läßt sich somit die Wirkung des Stoffes 15 auf den das Düngestäbchen bei der Anwendung umgebenden Boden einstellen, sofern nicht im Stoff 15 andere Stoffe zugegeben sind, die den Verbrauch des Stoffes pro Zeiteinheit beeinflussen. Zum Verbrauch pro Zeiteinheit wird auch die Festigkeit des Stoffes 15 beitragen, die gering sein kann.

Figur 9 zeigt einen weiteren Querschnitt einer stranggepreßten Rinne, die mit einem mittigen Steg 16 versehen zwei nach oben zum Zwecke der Füllung offene Rinnen hat, die entsprechend getrennt sind. Eine solche Ausbildungsform kann in manchen Fällen vorteilhaft sein, weil nebeneinander zwei verschiedene Stoffe einfüllbar sind.

Figur 10 zeigt einen Extruder mit dem zylindrischen Gehäuse 17, in dem die Förderschnecke 18 angeordnet ist. Aus dem Spritzkopf 19 in Gestalt der Darstellung des Düngestäbchens nach Figur 7 U-förmigen Öffnung 20 tritt der die Rinne bildende Stoff aus. Außerhalb des Spritzkopfes ist dieser austretende U-förmige Strang unterstützt durch ein der Außenkontur des Stranges angepaßtes Stützblech 21, welches abhängig von der Festigkeit des Stranges nach dem Verlassen aus dem Extruder mehr oder weniger lang ist. Dieses Stützblech 21 hat aber auch die Wirkung, den aus dem Zufuhrröhrchen 23 austretenden zweiten Stoff, der gegebenenfalls über eine Förderpumpe 24 zugeführt wird, so abzufedern, abhängig von der Pumpe und dem Förderdruck und der Konsistenz des zweiten Stoffes 15, daß die Rinne 14 nicht nach ¿unten ausgebeult oder in sonstiger Weise verformt wird.

Der zweite Stoff kann in flüssiger oder pastöser Form über ein Röhrchen 23 in Verbindung mit einer Förderpumpe in die Rinne eingebracht werden. Es ist jedoch auch möglich, diesen zweiten Stoff mit entsprechenden Bindemitteln versehen in im wesentlichen körniger Gestalt in die Rinne einzubringen. Die Menge der Einbringung pro Zeiteinheit ist so bemessen, daß der zweite Stoff bzw. Belag die Rinne voll ausfüllen kann bzw. ausfüllen soll. Um ein Überlaufen aus der Rinne zu vermeiden, kann oberhalb der extrudierenden Rinne 14 im nahen Bereich der Zuführung ein Abdeckblech vorhanden sein, das ein Austreten aus der stranggepreßten Rinne vermeidet, so lange der in die Rinne eingefüllte Stoff nicht erhärtet ist.

## Ansprüche

1. Verfahren zum Herstellen von Düngestäbchen aus Düngemitteln mit einem durch Pressen, insbesondere Strangpressen erhaltenen Grundkörper, dadurch gekennzeichnet, daß auf den Grundkörper ein Belag aus einem zum Stoff des Grundkörpers unterschiedlichen Stoff aufgebracht wird.

2. Verfahren nach Anspruch 1, dadurch gekennzeichnet, daß gepreßte Kerne vorbeschriebener Länge in eine Dragiertrommel oder in ein Wirbelbett eingebracht und nach dem Dragierverfahren durch Aufsprühen und Anwendung von Hitze mit dem Belag versehen werden.

3. Verfahren nach Anspruch 1, dadurch gekennzeichnet, daß durch Dragieren in einer Dragiertrommel bzw. Wirbelbett oder mehreren hintereinander angeordneten Dragiertrommeln bzw. Wirbelbetten die Kerne (14) mit einer Wachsschicht (14a) umgeben, dann in der Dragiertrommel die mit Wachs beschichteten Kerne mit dem Belag (15) aus einem anderen Stoff dragiert und anschließend dieser Belag mit einer Wachsschicht (16) versehen wird.

4. Verfahren zum Herstellen der Düngestäbchen nach Anspruch 1, dadurch gekennzeichnet, daß zunächst in einem Extruder (17, 18) ein Strang aus einem ersten Stoff mit rinnenförmigem Querschnitt (14) geformt und außerhalb des Spritzkopfes (19) in die nach außen offene Rinne bzw. offenen Rinnen ein zweiter Stoff (15) eingebracht und in der Rinne zur Aushärtung bzw. Erstarrung gebracht wird.

5. Düngestäbchen, bestehend aus mehreren verschiedenen Stoffen, die räumlich getrennt sind und in axialer Richtung verlaufen, hergestellt nach Anspruch 4, dadurch gekennzeichnet, daß es eine stranggepreßte im wesentlichen U-förmige Rinne (14) aus einem ersten Stoff aufweist, in die als Belag der zweite Stoff (15) eingebettet ist.

6. Düngestäbchen nach Anspruch 4, dadurch gekennzeichnet, daß die im wesentlichen U-förmige Rinne (14) von dem eingebetteten Belag (15) voll ausgefüllt ist.

7. Düngestäbchen nach den Ansprüchen 5 und 6, dadurch gekennzeichnet, daß die längsverlaufende Rinne durch eine mit dem Strangprofil einstückige Wandung (16) in zwei nebeneinander angeordnete Rinnen unterteilt ist.

8. Düngestäbchen nach Anspruch 2, dadurch gekennzeichnet, daß der Belag (15) nach dem Dragierverfahren aufgebracht ist und den Kern (14) vollständig umgibt.

9. Düngestäbchen nach einem der Ansprüche 4 bis 8, dadurch gekennzeichnet, daß der Belag (15) bzw. der in der Rinne eingebrachte zweite Stoff aus Braunalge, insbesondere unter der Bezeichnung "Cremogen", besteht oder Braunalge enthält.

10. Düngestäbchen nach einem der Ansprüche 4 bis 8, dadurch gekennzeichnet, daß der Belag (15) aus einem Eiweiß, insbesondere Eiweißhydrolysat, besteht oder Eiweiß enthält.

11. Düngestäbchen nach einem der Ansprüche 4 bis 8, dadurch gekennzeichnet, daß der Belag (15) aus Zucker, insbesondere aus Sudzucker besteht oder Zucker enthält.

12. Düngestäbchen nach einem der Ansprüche 1 bis 8, dadurch gekennzeichnet, daß der Belag (15) neben den einzelnen oder in Kombination vorliegenden Algen, dem Eiweiß und dem Zucker, ein Wachs, insbesondere Polywachs, in einem Anteil von 5 bis 35 Gewichtsprozent enthält.

13. Düngestäbchen nach Anspruch 12, dadurch gekennzeichnet, daß der Belag (15) aus 25 Gewichtsprozent Algen und wasserlöslichem Wachs besteht.

14. Düngestäbchen nach einem der Ansprüche 4 bis 8, dadurch gekennzeichnet, daß der Belag (15) aus einer Mischung von Zucker mit Algen besteht.

15. Düngestäbchen nach einem der Ansprüche 4 bis 8, dadurch gekennzeichnet, daß der Belag

40 bis 80 Gewichtsprozent Sudzucker,
10 bis 40 Gewichtsprozent Algen (Cremogen),
5 bis 20 Gewichtsprozent wasserlöslichen Wachs
enthält.

16. Düngestäbchen nach Anspruch 15, dadurch gekennzeichnet, daß der Belag (15)

65 bis 75 Gewichtsprozent Sudzucker,
15 bis 25 Gewichtsprozent Algen (Cremogen),
2 bis 10 Gewichtsprozent wasserlöslichen Wachs
enthält.

17. Düngestäbchen nach Anspruch 8, dadurch gekennzeichnet, daß der Belag (15) aus einer Mischung aus Eiweiß und Zucker besteht.

18. Düngestäbchen nach Anspruch 17, dadurch gekennzeichnet, daß der Belag

40 bis 80 Gewichtsprozent Eiweiß - (insbesondere als Eiweißhydrolysat),
30 bis 70 Gewichtsprozent Zucker (insbesondere als Sudzucker),
3 bis 10 Gewichtsprozent wasserlöslichen Wachs
enthält.

19. Düngestäbchen nach Anspruch 8 und einem oder mehreren der Ansprüche 9 bis 17, dadurch gekennzeichnet, daß zwischen dem Kern (14) und dem Belag (15) eine Schicht (16) aus einem Wachs vorhanden ist.

20. Düngestäbchen nach Anspruch 8, dadurch gekennzeichnet, daß der Belag (15) außen mit einer Schicht (16) aus Wachs bedeckt ist.

21. Düngestäbchen nach Anspruch 8 und einem oder mehreren der Ansprüche 9 bis 20, dadurch gekennzeichnet, daß in dem Belag (19) einzeln oder in Kombination die Algen, das Eiweiß oder der Zucker in Mengen von 5 bis 50 Gewichtsprozent des Gewichtes des Kerns haben.

22. Düngestäbchen nach einem der Ansprüche 4 bis 8, dadurch gekennzeichnet, daß der Belag aus Vitaminen besteht.

23. Düngestäbchen nach einem oder der Ansprüche 4 bis 8, dadurch gekennzeichnet, daß der Belag Bakterien enthält.

FIG.1

FIG.2     FIG.3     FIG.4     FIG.5

FIG.6

FIG.7

FIG.8

FIG.9

FIG.10

FIG.11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | DE-A-3 530 297 (BARNÄNGEN DEUTSCHLAND GmbH) * Spalte 4, Zeile 41 - Spalte 5, Zeile 18; Spalte 6, Zeilen 6-12; Figur 2 * | 1 | C 05 G 5/00 A 01 C 21/00 |
| A | | 4 | |
| A | DE-A-3 405 521 (BASF AG) | | |
| A | GB-A-1 406 027 (W.R. REES) | | |
| A | US-A-4 063 919 (J. GRANO, Jr.) | | |
| A | DE-A-2 003 862 (HANS GIESICKE OHG) | | |

RECHERCHIERTE SACHGEBIETE (Int. Cl.4)

C 05 G
A 01 C
A 01 G

Der vorliegende Recherchenbericht wurde für alle Patentansprüche erstellt

| Recherchenort | Abschlußdatum der Recherche | Prüfer |
|---|---|---|
| DEN HAAG | 04-02-1988 | SCHUT,R.J. |

EPO FORM 1503 03.82 (P0403)